# EUROPEAN PATENT SPECIFICATION

(11) **EP 3 267 102 B1**
(45) Date of publication and mention of the grant of the patent: **02.09.2020**
(21) Application number: 17180065.9
(22) Date of filing: 06.07.2017
(51) Int. Cl.: F23C 99/00, F23D 14/70, F23D 14/84, F01N 3/26

(54) **FLAMELESS THERMAL OXIDIZER AND CORRESPONDING METHOD**
FLAMMENLOSER THERMISCHER OXIDATOR UND ZUGEHÖRIGES VERFAHREN
DISPOSITIF D'OXYDATION THERMIQUE SANS FLAMME ET PROCÉDÉ CORRESPONDANT

(30) Priority: 07.07.2016 US 201662359270 P; 29.06.2017 US 201715636909
(43) Date of publication of application: 10.01.2018
(73) Proprietor: Linde GmbH, 82049 Pullach (DE)
(72) Inventor: IRRGANG, Gene H., Horsham, PA Pennsylvania 19044 (US); PREDATSCH, Eric, Conshohocken, PA Pennsylvania 19428 (US); KORN, Steven, Northampton, PA Pennsylvania 18067 (US); RICHARDSON, Andrew P., Clinton, NJ New Jersey 08809 (US)
(74) Representative: Gellner, Bernd

(56) References cited:
- US-A- 6 015 540
- US-A1- 2006 183 064
- US-A1- 2011 283 991

## Description

### Technical field of the present invention

The present invention relates to a flameless thermal oxidizer (FTO) and to a corresponding method (cf. reference US 6,015,540).

### Technological background of the present invention

Known FTOs have been used to maintain an oxidation reaction of gaseous waste stream(s) within a matrix of the FTO. However, such arrangements result in a limited flow capacity and limited reaction stability within the FTO. This is because the overcapacity reaction envelope or "reaction bubble" produced from the FTO diptube permits the incomplete oxidation reaction products to flow rapidly upward to and break or pierce through the top surface of the FTO matrix.

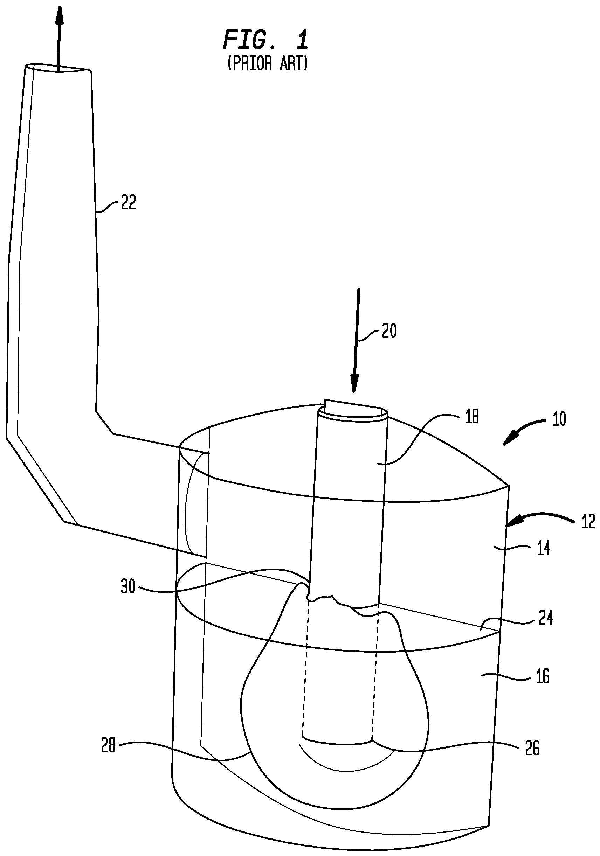

An example of a known FTO is shown in FIG. 1 and referenced generally as 10. The known FTO is a flameless matrix bed reactor which includes a vessel 12 or container in which a reaction chamber 14 is disposed. A porous matrix 16 is arranged in the reaction chamber 14, but does not completely fill the chamber.

A diptube 18 extends into the reaction chamber 14 and into the porous matrix 16 for providing a reactable process stream 20 into the porous matrix 16. The oxidation product exhaust stack 22 is a continuation of the reaction space 14 above a surface 24 of the porous matrix 16.

In operation, the known FTO 10 receives the reactable process stream 20 in the diptube 18 whereupon the stream 20 is exhausted from an outlet 26 of the diptube 18 into the porous matrix 16 thereby creating a reaction bubble or reaction envelope 28.

However, the reaction bubble or reaction envelope 28 resulting from the stream will move vertically upward in the porous matrix 16 and along the diptube 18 and break or pierce the surface 24 of the matrix 16 as turbulence shown generally at 30. This vertical movement or "short circuiting" occurs because there is no structure or method to impede or prevent such vertical movement.

What is therefore needed is an FTO that provides for a greater volume of the porous matrix 16 to be used which would result in a more stable reaction bubble or reaction envelope 28 being created resulting in an increased capacity of the reactable process stream 20.

### Disclosure of the present invention: object, solution, advantages

Starting from the disadvantages and shortcomings as described above as well as taking the prior art as discussed into account, an object of the present invention is to overcome the limitations and problems that earlier apparatus and earlier methods have experienced.

This object is accomplished by an apparatus comprising the features of claim 1 as well as by a method comprising the features of claim 6.

Advantageous embodiments, expedient improvements and other optional features of the present invention are set forth herein and disclosed in the respective dependent claims.

There is therefore provided a flameless thermal oxidizer (FTO) as well as a related method of increasing capacity with the FTO, in particular by shaping a reaction zone.

More particularly, there is provided a flameless thermal oxidizer (FTO) apparatus according to claim 1.

According to an advantageous embodiment of the present invention, the at least one baffle may be constructed from a material selected from the group consisting of an impermeable material, and a semi-permeable material.

In a preferred embodiment of the present invention, the at least one baffle may extend across a substantial portion of a surface area of the porous matrix.

In an expedient embodiment of the present invention, the at least one baffle may be positioned closer to an outlet of the diptube than the surface of the porous matrix.

In a preferred embodiment of the present invention, the upper and lower baffles each may comprise similar shapes and may have similar surface areas.

According to an advantageous embodiment of the present invention, the upper and lower baffles may each be constructed from a material selected from the group consisting of an impermeable material and a semi-permeable material.

According to a favoured embodiment of the present invention, a central baffle may be positioned in the porous matrix between and spaced apart from each of the upper baffle and the lower baffle.

In a preferred embodiment of the present invention, the upper, lower and central baffles each may have a different size and surface area.

A related method to radially expand the reaction bubble in the porous matrix is also provided.

More particularly, there is further provided a method of controlling a reaction envelope acording to claim

According to an advantageous embodiment of the present invention, the reaction envelope may be bubble-shaped.

In an expedient embodiment of the present invention, the expanding may occur in the porous matrix beneath the at least one baffle.

According to a favoured embodiment of the present invention, the expanding of the reaction envelope may provide increasing a residence time of the reaction envelope in the porous matrix after being emitted from the diptube.

In a preferred embodiment of the present invention, the positioning of the at least one baffle may be at and/or below a surface of the porous matrix.

According to the present invention, the second baffle is spaced apart from the at least one baffle.

In an expedient embodiment of the present invention, the providing of the second baffle may be closer to an outlet of the diptube than to the at least one baffle.

According to a favoured embodiment of the present invention, a third baffle may be provided in the porous matrix between and spaced apart from the at least one baffle and the second baffle.

In a preferred embodiment of the present invention, the least one, second and third baffles may provide a flow path varying and increasing residence time of the reaction envelope in the porous matrix.

According to an advantageous embodiment of the present invention, the radially expanding the reaction envelope may comprise downward movement of said reaction envelope in the porous matrix.

### Brief description of the drawings

For a more complete understanding of the present embodiment disclosures and as already discussed above, there are several options to embody as well as to improve the teaching of the present invention in an advantageous manner. To this aim, reference may be made to the claims dependent on claim 1 as well as on claim 6; further improvements, features and advantages of the present invention are explained below in more detail with reference to the particular and preferred embodiments by way of non-limiting example and to the appended drawing figures taken in conjunction with the following description of exemplary embodiments, of which:
FIG. 1 shows a portion of a known flameless thermal oxidizer (FTO), and the disposition of the reaction envelope in same;
FIG. 2 shows a reaction chamber of a flameless thermal oxidizer (FTO) having a baffle;
FIG. 3 shows another baffle apparatus for a flameless thermal oxidizer (FTO) ; and
FIG. 4 shows an embodiment of a baffle apparatus for a flameless thermal oxidizer (FTO) according to the present invention, said apparatus working according to the method of the present invention.

The accompanying drawings are included to provide a further understanding of the apparatus and method(s) provided herein and are incorporated in and constitute a part of this specification. The drawings illustrate an embodiment of the apparatus and method(s) provided herein and, together with the description, serve to explain the principles described herein but are not intended to limit the specification or any of the claims.

### Detailed description of the drawings;

### best way of embodying the present invention

Before explaining the present inventive embodiments in detail, it is to be understood that the embodiments are not limited in its respective application to the details of construction and arrangement of parts illustrated in the accompanying drawings, since the present invention is capable of other embodiments and of being practiced or carried out in various ways. Also, it is to be understood that the phraseology or terminology employed herein is for the purpose of description and not of limitation.

In the following description, terms such a horizontal, upright, vertical, above, below, beneath and the like, are used solely for the purpose of clarity illustrating the present invention and should not be taken as words of limitation. The drawings are for the purpose of illustrating the present invention and are not intended to be to scale.

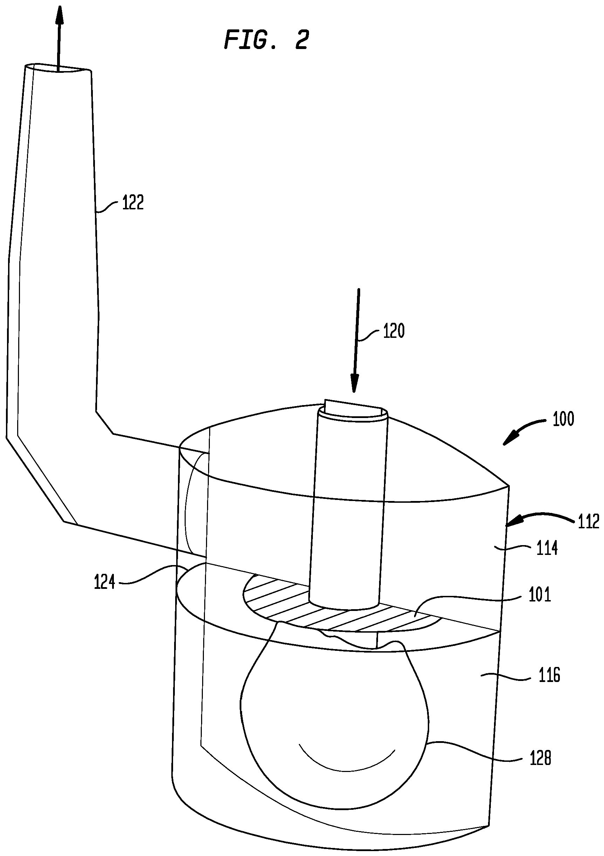

In general, and in an FTO of the present FIG. 2, the introduction of impermeable or semi-permeable baffles surrounding the diptube of the FTO between an upper surface of a porous matrix and a discharge of the diptube is shown. The baffles are arranged to inhibit or prevent a vertical movement (known as "short circuiting") of gases exiting the diptube and subsequent reaction products around an exterior of the diptube.

By "impermeable" it is meant that the material and construction of the baffle is such that no gas may pass through the baffle. The meaning of "semi-permeable" as used herein means that a portion of gas may pass through the baffle. The terms "reaction envelope" and "reaction bubble" can be used herein interchangeably.

Referring to FIG. 2 to FIG. 4, two FTOs and one embodiment of an FTO according to the present invention are shown. Two exemplary FTOs and one exemplary embodiment of an FTO constructed in accordance with the present invention are illustrated in FIG. 2 to FIG. 4, respectively. Elements illustrated in FIG. 2 to FIG. 4 which correspond to the elements described above with respect to FIG. 1 have been designated by corresponding reference signs increased by 100, 200 and 300 compared to FIG. 1, respectively.

In order to avoid unnecessary repetitions, the explanations above and below relate to all three of the exemplary FTOs illustrated in FIG.2 to FIG.4 with respect to the configurations, features and advantages of the present invention, unless otherwise stated. The FTOs of FIG. 2 to FIG. 4 are designed for use in the same manner as the FTO of FIG. 1 unless otherwise stated:
Referring to FIG. 2, a first FTO is shown generally at 100. The FTO 100 is a flameless matrix bed reactor which includes a vessel 112 or container in which a reaction chamber 114 is disposed. A porous matrix 116 is arranged in the reaction chamber 114, but does not completely fill the chamber.

A diptube extends into the reaction chamber 114 and into the porous matrix 116 for providing a reactable process stream 120 into the porous matrix 116. The oxidation product exhaust stack 122 is a continuation of the reaction space 114 above the surface 124 of the porous matrix 116.

In operation, the FTO 100 receives the reactable process stream 120 in the diptube whereupon the stream 120 is exhausted from the outlet of the diptube into the porous matrix 116 thereby creating a reaction bubble or reaction envelope 128.

The FTO 100 includes a baffle 101 at or proximate the surface 124 of the porous matrix 116 disposed in the reaction chamber 114 of the FTO 100. As shown in FIG. 2, the baffle 101 can be constructed from impermeable or semi-permeable material. The baffle 101 substantially reduces if not eliminates short circuiting of the reaction bubble or reaction envelope 128 resulting from the stream 120 so that the reaction bubble or reaction envelope 128 expands with an increased residence time within the porous matrix 116.

In other words, the baffle 101 provides a structure impeding or preventing a vertical upward movement or "short circuiting" of the reaction bubble or reaction envelope 128 in the porous matrix 116 and along the diptube. Disruptive turbulence at the surface 124 of the matrix 116 is avoided, and thus a breaking or piercing of the surface 124 of the matrix 116 is avoided.

Due to the perspective view of FIG. 2, approximately one-half of the baffle 101 is shown, but it is understood that a remaining portion of the baffle 101 extends a corresponding amount at or proximate the surface 124 of the porous matrix 116.

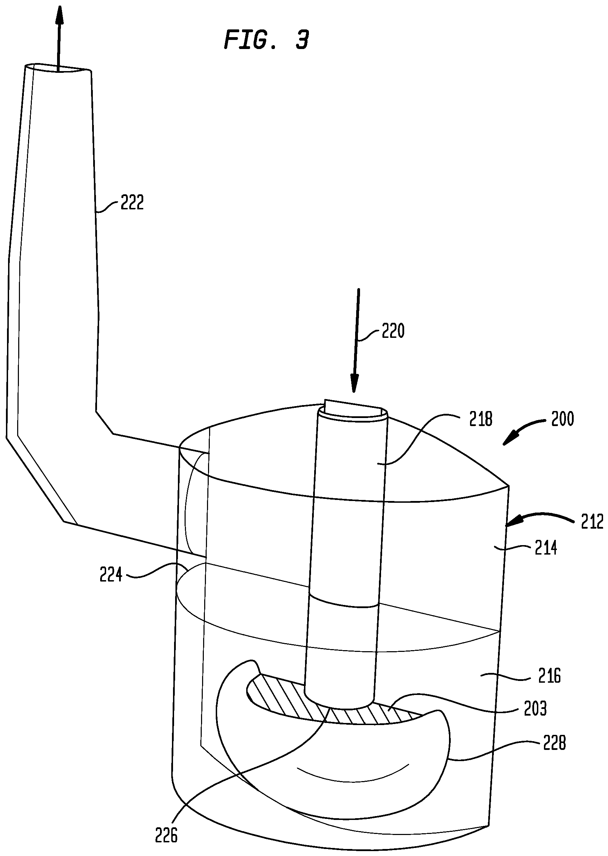

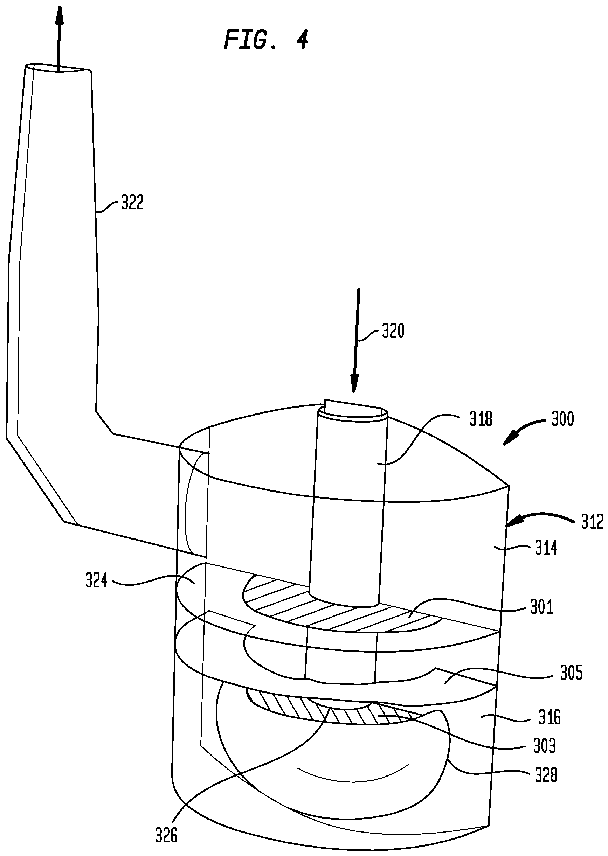

An other exemplary FTO and an other exemplary embodiment of an FTO constructed in accordance with the present invention are illustrated in FIG.3 and in FIG.4, respectively. Elements illustrated in FIG.3 and in FIG.4 which correspond to the elements described above with respect to FIG. 2 have been designated by corresponding reference signs increased by 100 and 200 compared to FIG. 2, respectively. The FTOs of FIG. 3 and of FIG. 4 are designed for use in the same manner as the FTO of FIG. 2 unless otherwise stated.

Referring to FIG. 3, another FTO is shown generally at 200, and includes a baffle 203 at or proximate an outlet 226 of a diptube 218 in a porous matrix 216 in the reaction chamber 214 of the FTO. As shown in FIG. 3, the baffle 203 can be constructed from impermeable or semi-permeable material.

The baffle 203 substantially reduces if not eliminates short circuiting of the reaction bubble 228 so that same expands with an increased residence time within the porous matrix 216. Disruptive turbulence at the surface 224 is avoided.

Due to the perspective view of FIG. 3, approximately one-half of the baffle 203 is shown, but it is understood that a remaining portion of the baffle 203 extends a corresponding amount at or through the porous matrix 216.

Referring to FIG. 4, an embodiment of an FTO according to the invention is shown generally at 300, and includes a baffle 301 at or proximate a surface 324 of a porous matrix 316 disposed in the reaction chamber 314 of the FTO. As also shown in FIG. 4, there is included a baffle 303 at or proximate an outlet 326 of a diptube 318 in a porous matrix 316 at the reaction chamber 314 of the FTO.

As shown in FIG. 4, the baffles 301, 303 can be constructed from impermeable or semi-permeable material. The baffles 301, 303 substantially reduce if not eliminate short circuiting of the reaction bubble 328 so that the same expands with an increased residence time within the porous matrix 316.

The embodiment of FIG. 4 may also include a central baffle 305 positioned in the porous matrix 316 between the baffle 301 (upper) and the baffle 303 (lower). The central baffle 305 may also be constructed from impermeable or semi-permeable material. The use of the central baffle 305 provides for a more sinuous or circuitous path for constituents to travel through the porous matrix 316 from the reaction bubble 328.

Due to the perspective view of the embodiment in FIG. 4, approximately one-half of the baffles 301, 303, 305 are shown, but it is understood that the remaining portions of these baffles 301, 303, 305 extend a corresponding amount along the porous matrix 316.

By inhibiting the immediate vertical movement of the gases and combustion products from the reaction bubbles 128, 228 328, the flow from the diptubes 218, 318 is forced to move radially outwards and expand, as well as move downward.

Such an expanding flow field not only avoids the "short circuiting" discussed above, but also
i) causes a greater volume of the porous matrix 116, 216, 316 to be utilized, and
ii) provides a more stable reaction bubble 128, 228, 328 to form at higher flow capacities within the matrix 116, 216, 316.

FIG. 2 to FIG. 4 show internal baffle apparatus for the FTOs 100, 200 and 300 and related methods, of these Fig. 4 represents an embodiment according to the present invention. Each one of the apparatus and methods shown in FIG. 2 to FIG. 4 provide alternate ways in which baffles may be employed at an interior of an FTO to better control reaction within same and provide for a more efficient processing of the reactable process stream 120,220,320.

The justification for providing a more stable reaction bubble 128, 228, 328 at higher volumes of reactable process streams 120, 220, 320 being provided to the FTOs 100, 200, 300 is as follows.

Referring to FIG. 2 by way of example only, a surface of the reaction bubble is determined by "knitting together local locations", wherein the combustion reaction takes place to form a combustion envelope or reaction bubble.

Within the reaction envelope (or reaction bubble), there are predominantly reactants, while external or outside the envelope there are predominantly products. "Predominantly" herein means that while the combustion reactions are fast, such reactions do take a certain amount of time and therefore, external to and proximate the envelope there are varying degrees of combustion completeness.

The local oxidation reaction occurs where the local reaction speed (the speed at which the reaction would propagate into a quiescent mixture of the same composition, pressure and temperature) matches the local flow velocities, i.e. the speed of the gas moving through the matrix. When these two speeds (the reaction speed and the gas velocity) match, the location of the combustion reaction is fixed in position and therefore, a stable reaction envelope or "reaction bubble" is formed.

Forcing the flow from the diptube outlet (for example 226) outwards in a radial /downward direction causes the flow to decelerate in a direction away from the diptube, and the reaction envelope or reaction bubble will form at a certain distance from the diptube. Furthermore, with an increasing flow rate the "reaction bubble" may be expected to move radially outwards until the velocity is reduced to again match the reaction speed.

The absence of a submerged baffle 203, 303 proximate an outlet of the submerged diptube 218, 318 results in the combustion gases being distributed into a flow path that minimizes the pressure drop through the porous matrix. A significant portion of the combustion gas therefore flows in the shortest path immediately up and around the diptube.

This means that the gases do not all flow significantly radially/downward and accordingly, there is the propensity for the uncombusted gases to well-up around the diptube prior to the reaction bubble or reaction envelope growing to occupy a significant portion of the vessel or bed diameter. Use of the baffles 203, 303 prevents such occurrence.

The placement of a baffle above and also surrounding the discharge outlet of the diptube forces the gases to move radially outwards, also to disperse downwards to form the three-dimensional ("3-D") curved surface without moving vertically. This allows the reaction bubble to form at greater radii prior to breakthrough at the bed surface.

The effect on stability and capacity is magnified as the local flow velocity will vary inversely proportionally to the square of the radial distance from the diptube. Thus, a change in overall flow or composition at high flow rates can be accommodated by only a small movement in the reaction bubble.

In FIG. 2 to FIG. 4, the mixed gases exiting or being exhausted from the diptube outlet will distribute into the matrix 116, 216, 316 according to pressure drop. The lowest pressure path is along the circumference of the diptube.

Because the reaction zone is defined as the point where the velocity of the gas is equal to the reverse velocity of the reaction, the controlling velocity is that of the gases along the diptube. The present embodiments provide that the shape of the reaction zone is an ellipsoid, when in fact it resembles a tear drop.

The design flow rates provided by the present calculation based on the ellipsoid provide a breakthrough of partially combusted gases around the diptube that limits the capacity of the system. In an installation where the size of the vessel 112 size is 22 feet (about 6.71 m) in diameter, a baffle was installed at the top of the bed to prevent the breakthrough.

The impact on capacity was not a concern and therefore not quantified or accounted for. During CFD study examples to determine baffle placement in the reaction chamber, alternate baffle placement was considered only as related to minimizing breakthrough. Examples included a twelve feet (about 3.66 m) diameter FTO, with no baffle, an upper baffle (two different diameters) and a lower baffle.

The upper baffle achieved the same results as with the current operating unit with respect to restricting the reaction within the matrix. The lower baffle also accomplished the same result, but provided an additional advantage of increasing the capacity on the order of 250 percent to 300 percent, i.e. 6 MM Btu/hr (about 1.76 MW) as taught by the current embodiment to 15 MM Btu/hr (about 4.40 MW).

It will be understood that the embodiment described herein is merely exemplary, and that one skilled in the art may make variations and modifications without departing from the scope of the present invention. All such variations and modifications are intended to be included within the scope of the present invention as defined in the claims.

### List of reference signs

- 10: flameless thermal oxidizer (FTO), in particular flameless matrix bed reactor (prior art; cf. FIG. 1)
- 12: container or vessel
- 14: reaction chamber or reactive chamber
- 16: porous matrix
- 18: diptube
- 20: reactable process stream
- 22: oxidation product exhaust stack
- 24: surface of porous matrix 16
- 26: outlet of diptube 18
- 28: reaction envelope, in particular reaction bubble
- 30: turbulence
- 100: flameless thermal oxidizer (FTO), in particular flameless matrix bed reactor (first embodiment; cf. FIG. 2)
- 101: baffle, in particular upper baffle
- 112: container or vessel
- 114: reaction chamber or reactive chamber
- 116: porous matrix
- 120: reactable process stream
- 122: oxidation product exhaust stack
- 124: surface of porous matrix 116
- 128: reaction envelope, in particular reaction bubble
- 200: flameless thermal oxidizer (FTO), in particular flameless matrix bed reactor (second embodiment; cf. FIG. 3)
- 203: baffle, in particular lower and/or submerged baffle
- 212: container or vessel
- 214: reaction chamber or reactive chamber
- 216: porous matrix
- 218: diptube, in particular submerged diptube
- 220: reactable process stream
- 222: oxidation product exhaust stack
- 224: surface of porous matrix 216
- 226: outlet of diptube 218
- 228: reaction envelope, in particular reaction bubble
- 300: flameless thermal oxidizer (FTO), in particular flameless matrix bed reactor (third embodiment; cf. FIG. 4)
- 301: upper baffle
- 303: lower and/or submerged baffle
- 305: central baffle
- 312: container or vessel
- 314: reaction chamber or reactive chamber
- 316: porous matrix
- 318: diptube, in particular submerged diptube
- 320: reactable process stream
- 322: oxidation product exhaust stack
- 324: surface of porous matrix 316
- 326: outlet of diptube 318
- 328: reaction envelope, in particular reaction bubble

## Claims

1. A flameless thermal oxidizer (100; 200; 300), comprising:
- a reactive chamber (114; 214; 314);
- a porous matrix (116; 216; 316);
- a diptube (218; 318);
- at least one baffle (101; 203; 301, 303, 305) constructed and arranged in the reactive chamber (114; 214; 314) to coact with the diptube (218; 318) to radially expand a resulting reaction envelope (128; 228; 328) from the diptube (218; 318) outward into the porous matrix (116; 216; 316), the at least one baffle (101; 203; 301, 303, 305) being positioned in the reactive chamber (114; 214; 314) at and/or below a surface (124; 224; 324) of the porous matrix (116; 216; 316),
**characterized in that** the at least one baffle is an upper baffle (101; 301, 305) positioned in the reactive chamber (114; 314) at a surface (124; 324) of the porous matrix (116; 316), and further comprising a lower baffle (203; 303) positioned in the reactive chamber (214; 314) below the surface (224; 324) of the porous matrix (216; 316).

2. The flameless thermal oxidizer according to claim 1, wherein the at least one baffle (101; 203; 301, 303, 305)
- is constructed from a material selected from the group consisting of an impermeable material and a semi-permeable material, and/or
- extends across a portion of a surface area of the porous matrix (116; 216; 316), and/or
- is positioned closer to an outlet (226; 326) of the diptube (218; 318) than the surface (124; 224; 324) of the porous matrix (116; 216; 316).

3. The flameless thermal oxidizer according to at least one of claims 1 or 2, wherein the lower baffle (203; 303) is spaced apart from the upper baffle (301).

4. The flameless thermal oxidizer according to claim 3, wherein the upper (101; 301) and lower (203; 303) baffles
- each comprise similar shapes and have similar surface areas, and/or
- are each constructed from a material selected from the group consisting of an impermeable material and a semi-permeable material.

5. The flameless thermal oxidizer according to at least one of claims 3 or 4 further comprising a central baffle (305) positioned in the porous matrix (316) between and spaced apart from each of the upper baffle (301) and the lower baffle (303), said upper (301), lower (303) and central (305) baffles each having in particular a different size and/or in particular a different surface area.

6. A method of controlling an, in particular bubble-shaped, reaction envelope (128; 228; 328) in a porous matrix (116; 216; 316) of a flameless thermal oxidizer (100; 200; 300), comprising:
- positioning at least one baffle (101; 203; 301, 303, 305) in the porous matrix (116; 216; 316) for coacting with the reaction envelope (128; 228; 328) emitted from a diptube (218; 318) of the flameless thermal oxidizer (100; 200; 300); and
- interrupting upward flow of the reaction envelope (128; 228; 328) with the at least one baffle (101; 203; 301, 303, 305) for radially expanding said reaction envelope (128; 228; 328) in said porous matrix (116; 216; 316), in particular beneath the at least one baffle (101; 203; 301, 303, 305), **characterized by** providing a second baffle (203; 303) in the porous matrix (216; 316) below the at least one baffle (101; 301, 305).

7. The method according to claim 6, wherein the expanding of the reaction envelope (128; 228; 328) provides increasing a residence time of the reaction envelope (128; 228; 328) in the porous matrix (116; 216; 316) after being emitted from the diptube (218; 318).

8. The method according to claim 6 or 79 wherein the positioning of the at least one baffle (101; 203; 301, 303, 305) is at and/or below a surface (124; 224; 324) of the porous matrix (116; 216; 316).

9. The method according to at least one of claims 6 to 8, wherein the second baffle (203; 303) is spaced apart from the at least one baffle (101; 301, 305).

10. The method according to claim 9, wherein the providing of the second baffle (203; 303) is closer to an outlet (226; 326) of the diptube (218; 318) than to the at least one baffle (101; 203; 301, 303, 305).

11. The method according to claim 9 or 10, further comprising providing a third baffle (305) in the porous matrix (316) between and spaced apart from the at least one baffle (101; 301) and the second baffle (203; 303).

12. The method according to claim 11, wherein the least one (101; 301), second (203; 303) and third (305) baffles provide a flow path varying and increasing residence time of the reaction envelope (128; 228; 328) in the porous matrix (116; 216; 316).

13. The method according to at least one of claims 6 to 12, wherein the radially expanding the reaction envelope (128; 228; 328) comprises downward movement of said reaction envelope (128; 228; 328) in the porous matrix (116; 216; 316).

## Patentansprüche

1. Flammenloser thermischer Oxidator (100; 200; 300), umfassend:
- eine Reaktionskammer (114; 214; 314);
- eine poröse Matrix (116; 216; 316);
- ein Tauchrohr (218; 318);
- mindestens ein Ablenkblech (101; 203; 301, 303, 305), das konstruiert und in der Reaktionskammer (114; 214; 314) angeordnet ist, um mit dem Tauchrohr (218; 318) zusammenzuwirken, um eine sich ergebende Reaktionshülle (128; 228; 328) von dem Tauchrohr (218, 318) radial nach außen in die poröse Matrix (116; 216; 316) auszudehnen, wobei das mindestens eine Ablenkblech (101; 203; 301, 303, 305) in der Reaktionskammer (114; 214; 314) an und/oder unter einer Oberfläche (124; 224; 324) der porösen Matrix (116; 216; 316) positioniert ist,
**dadurch gekennzeichnet, dass** das mindestens eine Ablenkblech ein oberes Ablenkblech (101; 301, 305) ist, das in der Reaktionskammer (114; 314) an einer Oberfläche (124; 324) der porösen Matrix (116; 316) positioniert ist, und ferner umfassend ein unteres Ablenkblech (203; 303), das in der Reaktionskammer (214; 314) unterhalb der Oberfläche (224; 324) der porösen Matrix (216; 316) positioniert ist.

2. Flammenloser thermischer Oxidator nach Anspruch 1, wobei das mindestens eine Ablenkblech (101; 203; 301, 303, 305)
- aus einem Material konstruiert ist, das ausgewählt ist aus der Gruppe bestehend aus einem undurchlässigen Material und einem halbdurchlässigen Material, und/oder
- sich über einen Anteil eines Oberflächenbereichs der porösen Matrix (116; 216; 316) erstreckt, und/oder
- näher an einem Auslass (226; 326) des Tauchrohrs (218; 318) positioniert ist als die Oberfläche (124; 224; 324) der porösen Matrix (116; 216; 316).

3. Flammenloser thermischer Oxidator nach mindestens einem der Ansprüche 1 oder 2, wobei das untere Ablenkblech (203; 303) von dem oberen Ablenkblech (301) beabstandet ist.

4. Flammenloser thermischer Oxidator nach Anspruch 3, wobei das obere (101; 301) und das untere (203; 303) Ablenkblech
- jeweils ähnliche Formen umfassen und ähnliche Oberflächenbereiche aufweisen, und/oder
- jeweils aus einem Material hergestellt sind, das ausgewählt ist aus der Gruppe bestehend aus einem undurchlässigen Material und einem halbdurchlässigen Material.

5. Flammenloser thermischer Oxidator nach mindestens einem der Ansprüche 3 oder 4, ferner umfassend ein mittleres Ablenkblech (305), das in der porösen Matrix (316) zwischen und jeweils beabstandet von dem oberen Ablenkblech (301) und dem unteren Ablenkblech (303) positioniert ist, wobei das obere (301), das untere (303) und das mittlere (305) Ablenkblech jeweils insbesondere eine unterschiedliche Größe und/oder insbesondere einen unterschiedlichen Oberflächenbereich aufweisen.

6. Verfahren zum Steuern einer, insbesondere blasenförmigen, Reaktionshülle (128; 228; 328) in einer porösen Matrix (116; 216; 316) eines flammenlosen thermischen Oxidators (100; 200; 300), umfassend:
- Positionieren mindestens eines Ablenkblechs (101; 203; 301, 303, 305) in der porösen Matrix (116; 216; 316) zum Zusammenwirken mit der Reaktionshülle (128; 228; 328), die von einem Tauchrohr (218; 318) des flammenlosen thermischen Oxidators (100; 200; 300) emittiert wird; und
- Unterbrechen einer Aufwärtsströmung der Reaktionshülle (128; 228; 328) mit dem mindestens einen Ablenkblech (101; 203; 301, 303, 305) zum radialen Ausdehnen der Reaktionshülle (128; 228; 328) in der porösen Matrix (116; 216; 316), insbesondere unterhalb des mindestens einen Ablenkblechs (101; 203; 301, 303, 305), **gekennzeichnet durch** Bereitstellen eines zweiten Ablenkblechs (203; 303) in der porösen Matrix (216; 316) unterhalb des mindestens einen Ablenkblechs (101; 301, 305).

7. Verfahren nach Anspruch 6, wobei das Ausdehnen der Reaktionshülle (128; 228; 328) ein Erhöhen der Verweilzeit der Reaktionshülle (128; 228; 328) in der porösen Matrix (116; 216; 316) nach dem Austreten aus dem Tauchrohr (218; 318) bewirkt.

8. Verfahren nach Anspruch 6 oder 7, wobei das Positionieren des mindestens einen Ablenkblechs (101; 203; 301, 303, 305) an und/oder unter einer Oberfläche (124; 224; 324) der porösen Matrix (116; 216; 316) erfolgt.

9. Verfahren nach mindestens einem der Ansprüche 6 bis 8, wobei das zweite Ablenkblech (203; 303) von dem mindestens einen Ablenkblech (101; 301, 305) beabstandet ist.

10. Verfahren nach Anspruch 9, wobei das Bereitstellen des zweiten Ablenkblechs (203; 303) näher an einem Auslass (226; 326) des Tauchrohrs (218; 318) als an dem mindestens einen Ablenkblech (101; 203; 301, 303, 305) erfolgt.

11. Verfahren nach Anspruch 9 oder 10, ferner umfassend das Bereitstellen eines dritten Ablenkblechs (305) in der porösen Matrix (316) zwischen und beabstandet von dem mindestens einen Ablenkblech (101; 301) und dem zweiten Ablenkblech (203; 303).

12. Verfahren nach Anspruch 11, wobei das mindestens eine (101; 301), zweite (203; 303) und dritte (305) Ablenkblech einen Strömungsweg bereitstellen, der die Verweilzeit der Reaktionshülle (128; 228; 328) in der porösen Matrix (116; 216; 316) variiert und erhöht.

13. Verfahren nach mindestens einem der Ansprüche 6 bis 12, wobei das radiale Ausdehnen der Reaktionshülle (128; 228; 328) eine Abwärtsbewegung der Reaktionshülle (128; 228; 328) in der porösen Matrix (116; 216; 316) umfasst.

## Revendications

1. Dispositif d'oxydation thermique sans flamme (100 ; 200 ; 300), comprenant :
- une chambre de réaction (114 ; 214 ; 314) ;
- une matrice poreuse (116 ; 216 ; 316) ;
- un tube plongeur (218 ; 318) ;
- au moins un déflecteur (101 ; 203 ; 301, 303, 305) construit et agencé dans la chambre de réaction (114 ; 214 ; 314) pour coopérer avec le tube plongeur (218 ; 318) pour évaser radialement une enveloppe de réaction résultante (128 ; 228 ; 328) à partir du tube plongeur (218 ; 318) vers l'extérieur dans la matrice poreuse (116 ; 216 ; 316), l'au moins un déflecteur (101 ; 203 ; 301, 303, 305) étant positionné dans la chambre de réaction (114 ; 214 ; 314) au niveau et/ou en dessous d'une surface (124 ; 224 ; 324) de la matrice poreuse (116 ; 216 ; 316),
**caractérisé en ce que** l'au moins un déflecteur est un déflecteur supérieur (101 ; 301, 305) positionné dans la chambre de réaction (114 ; 314) au niveau d'une surface (124 ; 324) de la matrice poreuse (116 ; 316) et comprenant en outre un déflecteur inférieur (203 ; 303) positionné dans la chambre de réaction (214 ; 314) en dessous de la surface (224 ; 324) de la matrice poreuse (216 ; 316).

2. Dispositif d'oxydation thermique sans flamme selon la revendication 1, dans lequel l'au moins un déflecteur (101 ; 203 ; 301, 303, 305)
- est construit à partir d'un matériau choisi dans le groupe constitué d'un matériau imperméable et d'un matériau semi-perméable et/ou
- s'étend à travers une partie d'une superficie de la matrice poreuse (116 ; 216 ; 316) et/ou
- est positionné plus près d'une sortie (226 ; 326) du tube plongeur (218 ; 318) que la surface (124 ; 224 ; 324) de la matrice poreuse (116 ; 216 ; 316).

3. Dispositif d'oxydation thermique sans flamme selon au moins l'une des revendications 1 ou 2, dans lequel le déflecteur inférieur (203 ; 303) est espacé du déflecteur supérieur (301).

4. Dispositif d'oxydation thermique sans flamme selon la revendication 3, dans lequel les déflecteurs supérieur (101 ; 301) et inférieur (203 ; 303)
- comprennent chacun des formes similaires et ont des superficies similaires et/ou
- sont construits chacun à partir d'un matériau choisi dans le groupe constitué d'un matériau imperméable et d'un matériau semi-perméable.

5. Dispositif d'oxydation thermique sans flamme selon au moins l'une des revendications 3 ou 4 comprenant en outre un déflecteur central (305) positionné dans la matrice poreuse (316) entre, et espacé par rapport à chacun parmi, le déflecteur supérieur (301) et le déflecteur inférieur (303), lesdits déflecteurs supérieur (301), inférieur (303) et central (305) ayant chacun en particulier une taille différente et/ou en particulier une superficie différente.

6. Procédé de commande d'une enveloppe de réaction (128 ; 228 ; 328), en particulier en forme de bulle, dans une matrice poreuse (116 ; 216 ; 316) d'un dispositif d'oxydation thermique sans flamme (100 ; 200 ; 300), comprenant :
- le positionnement d'au moins un déflecteur (101 ; 203 ; 301, 303, 305) dans la matrice poreuse (116 ; 216 ; 316) pour coopérer avec l'enveloppe de réaction (128 ; 228 ; 328) émise à partir d'un tube plongeur (218 ; 318) du dispositif d'oxydation thermique sans flamme (100 ; 200 ; 300) ; et
- l'interruption de l'écoulement vers le haut de l'enveloppe de réaction (128 ; 228 ; 328) avec l'au moins un déflecteur (101 ; 203 ; 301, 303, 305) pour évaser radialement ladite enveloppe de réaction (128 ; 228 ; 328) dans ladite matrice poreuse (116 ; 216 ; 316), en particulier en dessous de l'au moins un déflecteur (101 ; 203 ; 301, 303, 305), **caractérisé par** la fourniture d'un deuxième déflecteur (203 ; 303) dans la matrice poreuse (216 ; 316) en dessous de l'au moins un déflecteur (101 ; 301, 305).

7. Procédé selon la revendication 6, dans lequel l'évasement de l'enveloppe de réaction (128 ; 228 ; 328) fournit une augmentation d'un temps de séjour de l'enveloppe de réaction (128 ; 228 ; 328) dans la matrice poreuse (116 ; 216 ; 316) après avoir été émise à partir du tube plongeur (218 ; 318).

8. Procédé selon la revendication 6 ou 7, dans lequel le positionnement de l'au moins un déflecteur (101 ; 203 ; 301, 303, 305) est au niveau et/ou en dessous d'une surface (124 ; 224 ; 324) de la matrice poreuse (116 ; 216 ; 316).

9. Procédé selon au moins l'une des revendications 6 à 8, dans lequel le deuxième déflecteur (203 ; 303) est espacé de l'au moins un déflecteur (101 ; 301, 305).

10. Procédé selon la revendication 9, dans lequel la fourniture du deuxième déflecteur (203 ; 303) est plus près d'une sortie (226 ; 326) du tube plongeur (218 ; 318) que de l'au moins un déflecteur (101 ; 203 ; 301, 303, 305).

11. Procédé selon la revendication 9 ou 10, comprenant en outre la fourniture d'un troisième déflecteur (305) dans la matrice poreuse (316) entre, et espacé par rapport à, l'au moins un déflecteur (101 ; 301) et le deuxième déflecteur (203 ; 303).

12. Procédé selon la revendication 11, dans lequel les au moins un (101 ; 301), deuxième (203 ; 303) et troisième (305) déflecteurs fournissent une trajectoire d'écoulement faisant varier et augmentant le temps de séjour de l'enveloppe de réaction (128 ; 228 ; 328) dans la matrice poreuse (116 ; 216 ; 316).

13. Procédé selon au moins l'une des revendications 6 à 12, dans lequel l'évasement radial de l'enveloppe de réaction (128 ; 228 ; 328) comprend un mouvement vers le bas de ladite enveloppe de réaction (128 ; 228 ; 328) dans la matrice poreuse (116 ; 216 ; 316).
